# EUROPEAN PATENT APPLICATION

(11) **EP 4 586 452 A1**
(43) Date of publication of application: **16.07.2025**
(21) Application number: 23863135.2
(22) Date of filing: 04.09.2023
(51) Int. Cl.: H02J 7/00, H02J 7/02, H02M 7/48, H02M 7/501

(54) **POWER SUPPLY SYSTEM**

(30) Priority: 07.09.2022 JP 2022142470
(71) Applicant: TOYOTA JIDOSHA KABUSHIKI KAISHA, Toyota-shi Aichi 471-8571 (JP); Jera Co., Inc., Tokyo 103-6125 (JP)
(72) Inventor: MIKI, Hironori, Toyota-shi, Aichi 471-8571 (JP); IZUMI, Junta, Toyota-shi, Aichi 471-8571 (JP); BAN, Takayuki, Toyota-shi, Aichi 471-8571 (JP); OZAKI, Ryoichi, Tokyo 103-6125 (JP); MORIYAMA, Tomohiro, Tokyo 103-6125 (JP); SAKURAI, Yuta, Tokyo 103-6125 (JP); YOSHIDA, Takuji, Tokyo 103-6125 (JP)
(74) Representative: D Young & Co LLP
(86) International application number: PCT/JP2023/032204
(87) International publication number: WO 2024/053597

(57) **Abstract**

A power supply system includes a battery string (St) and a controller (200) that controls the battery string (St). The battery string (St) includes a plurality of battery circuit modules (10) connected in series. Each of the plurality of battery circuit modules (10) includes a battery (20), an output terminal (OT1, OT2), and a switch circuit (SWC) that switches between connection and disconnection of the battery (20) to and from the output terminal (OT1, OT2). The controller (200) is configured to individually perform, for each of the battery circuit modules (10), switching control to control the switch circuit (SWC) in accordance with a duty ratio, the duty ratio indicating a ratio between a connection period during which the output terminal (OT1, OT2) outputs a voltage of the battery (20), and a disconnection period during which the output terminal (OT1, OT2) does not output the voltage of the battery (20).

## Description

### TECHNICAL FIELD

The present disclosure relates to a power supply system.

### BACKGROUND ART

Japanese Patent Laying-Open No. 2021-191095 (PTL 1) discloses a power storage device that outputs electric power to a power grid.

### CITATION LIST

### PATENT LITERATURE

PTL 1: Japanese Patent Laying-Open No. 2021-191095

### SUMMARY OF INVENTION

### TECHNICAL PROBLEM

A power storage device such as a battery string has been proposed in order to increase capacity of the power storage device. The battery string includes a plurality of battery circuit modules connected in series. Each of these battery circuit modules includes a battery, an output terminal, and a switch circuit that switches between connection and disconnection of the battery to and from the output terminal. A voltage of the battery is applied to the output terminal in each battery circuit module, and output voltages (the voltages applied to the output terminals) of these battery circuit modules are combined to become an output voltage of the battery string.

One known method for controlling the battery string is to provide each battery circuit module with a delay circuit, and generate a command for each battery circuit module from a single signal by delaying the single signal in the delay circuit of each battery circuit module. Such a method for controlling the battery string is hereinafter also referred to as "sweep control."

In recent years, however, reuse of batteries has been promoted from the perspective of environmental protection. It is thus possible that used batteries may be utilized in a battery string as well. A used battery has characteristics that vary with the degree of deterioration of the battery. Alternatively, multiple batteries of different types (e.g., an output battery and a capacitive battery) may be mounted on a single battery string in order to improve performance of the battery string. When the aforementioned sweep control is applied to a battery string including multiple batteries having difference characteristics, input/output electric power of the battery string does not necessarily have a desired magnitude. Further, in a power supply system that applies the aforementioned sweep control to a battery string, it is difficult to adjust the state (e.g., the remaining amount of stored power) of each battery included in the battery string while controlling input/output of the battery string.

The present disclosure was made to solve the problem described above, and an object thereof is to make it easier to adjust the state of each battery included in a battery string while controlling input/output of the battery string.

### SOLUTION TO PROBLEM

A power supply system according to one aspect of the present disclosure includes a battery string and a controller that controls the battery string. The battery string includes a plurality of battery circuit modules connected in series. Each of the plurality of battery circuit modules includes a battery, an output terminal, and a switch circuit that switches between connection and disconnection of the battery to and from the output terminal. The controller is configured to individually perform, for each of the battery circuit modules, switching control to control the switch circuit in accordance with a duty ratio, the duty ratio indicating a ratio between a connection period during which the output terminal outputs a voltage of the battery, and a disconnection period during which the output terminal does not output the voltage of the battery.

In controlling the battery string, the controller individually performs, for each of the battery circuit modules, the switching control to control the switch circuit in accordance with the duty ratio (ratio between the connection period and the disconnection period). Such a controller allows adjustment of the duty ratio (ratio between the connection period and the disconnection period) for each battery, thus making it easier to freely select which battery should be connected and which battery should be disconnected in order to bring input/output electric power of the battery string close to a required value. This in turn makes it easier to adjust the state (such as current, voltage, temperature, and the remaining amount of stored power) of each battery included in the battery string while controlling input/output of the battery string.

The power supply system may include a U-phase battery string, a V-phase battery string and a W-phase battery string as the battery string. The U-phase battery string, the V-phase battery string and the W-phase battery string may be Y-connected to output three-phase AC power. In the switching control of each of the U-phase battery string, the V-phase battery string and the W-phase battery string, the controller may be configured to determine the duty ratio for each of the battery circuit modules using at least one of requested charging or discharging power, requested charging or discharging energy, a characteristic of the battery, and a state of the battery.

The configuration described above makes it easier to adjust the state (such as current, voltage, temperature, and the remaining amount of stored power) of each battery included in the battery strings while controlling the three-phase AC power that is output from the three battery strings (the U-phase, V-phase and W-phase battery strings).

### ADVANTAGEOUS EFFECTS OF INVENTION

The present disclosure can make it easier to adjust the state of each battery included in a battery string while controlling input/output of the battery string.

### BRIEF DESCRIPTION OF DRAWINGS

Fig. 1 is a diagram showing an overview of a circuit configuration of a power supply system according to an embodiment of the present disclosure.
Fig. 2 is a diagram showing a configuration of a battery string shown in Fig. 1.
Fig. 3 is a time chart showing an operation example of a switch circuit in accordance with drive signals generated according to a command from a controller, in the power supply system according to the embodiment of the present disclosure.
Fig. 4 is a flowchart showing processing according to switching control performed by the controller, in the power supply system according to the embodiment of the present disclosure.
Fig. 5 is a diagram for illustrating energy management performed by the power supply system according to the embodiment of the present disclosure.
Fig. 6 is a diagram for illustrating supplemental charging and supplemental discharging performed in the processing shown in Fig. 4.

### DESCRIPTION OF EMBODIMENTS

An embodiment of the present disclosure will be hereinafter described in detail with reference to the drawings. The same or corresponding parts in the drawings are denoted by the same reference characters and description thereof will not be repeated.

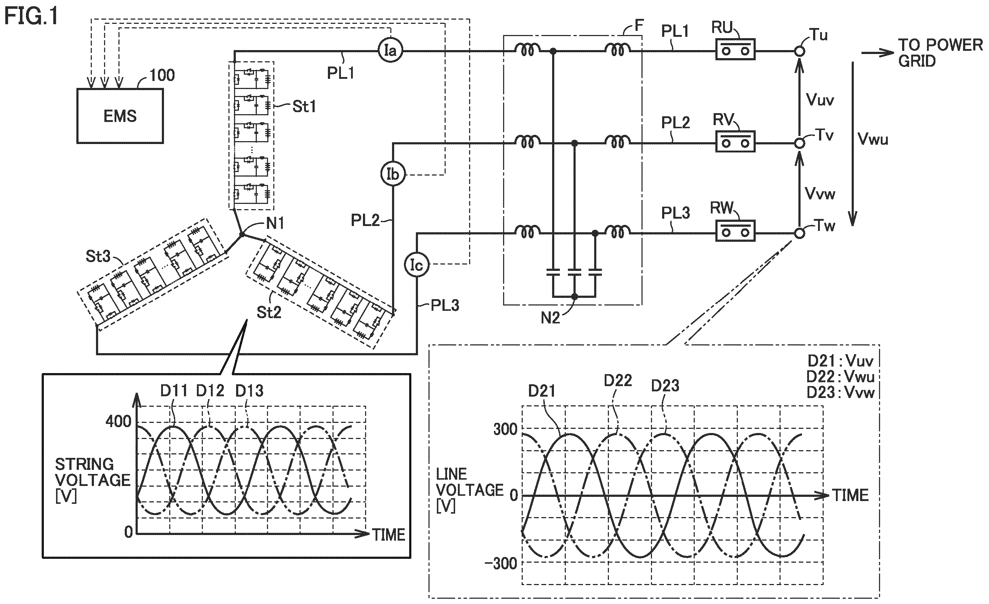

Fig. 1 is a diagram showing an overview of a circuit configuration of a power supply system according to this embodiment. Referring to Fig. 1, the power supply system according to this embodiment includes battery strings St1 to St3 and an energy management system (EMS) 100. Battery strings St1 to St3 are Y-connected to output three-phase AC power. Battery strings St1, St2 and St3 correspond to a U-phase battery string, a V-phase battery string and a W-phase battery string, respectively. Battery strings St1 to St3 are electrically connected to a not-shown power grid (commercial power supply), and are configured to supply and receive electric power to and from the power grid.

Battery strings St1 to St3 are configured to output three-phase AC power to output terminals Tu, Tv and Tw. Specifically, each of battery strings St1 to St3 has a negative terminal connected to a neutral point N1. Power lines PL1, PL2 and PL3 connect positive terminals of battery strings St1, St2 and St3 to output terminals Tu, Tv and Tw, respectively. Power lines PL1, PL2 and PL3 are provided with an LCL filter F that is connected to a neutral point N2. LCL filter F suppresses a cross current when a plurality of Y-connected systems/other power supplies are used in parallel, and attenuates a current ripple component in each of power lines PL1, PL2 and PL3.

Between LCL filter F and output terminals Tu, Tv and Tw, relays RU, RV and RW are provided for switching between conduction and cut-off of power lines PL1, PL2 and PL3, respectively. Each of relays RU, RV and RW is an electromagnetic mechanical relay, for example. Each of relays RU, RV and RW may switch between conduction and cut-off in response to a user operation. Relays RU, RV and RW are basically maintained in a conducting state during use of the power supply system. The user may bring relays RU, RV and RW into a cut-off state when stopping the use of the power supply system (e.g., during maintenance).

Between LCL filter F and battery strings St1, St2 and St3, current sensors Ia, Ib and Ic are provided for detecting currents flowing through power lines PL1, PL2 and PL3, respectively. Each of current sensors Ia, Ib and Ic outputs a detection value to EMS 100. A voltage of each of battery strings St1 to St3 has a voltage waveform of equal to or greater than 0 V with an offset. Waveforms D11, D12 and D13 in Fig. 1 indicate exemplary voltages of battery strings St1, St2 and St3, respectively. These string voltages are output to output terminals Tu, Tv and Tw through LCL filter F. Specifically, a line voltage Vuv is applied between output terminals Tu and Tv, a line voltage Vwu is applied between output terminals Tw and Tu, and a line voltage Vvw is applied between output terminals Tv and Tw. Each line voltage has an AC voltage waveform that periodically changes in polarity (positive and negative). Waveforms D21, D22 and D23 in Fig. 1 indicate exemplary line voltages Vuv, Vwu and Vvw, respectively. Although not shown in Fig. 1, the power supply system further includes voltage sensors that detect line voltages Vuv, Vwu and Vvw and output detection values to EMS 100. Using the detection results from the current sensors and the voltage sensors, EMS 100 sequentially detects the three-phase AC power that is output from battery strings St1 to St3.

Although battery strings St1 to St3 may have different configurations from one another, battery strings St1 to St3 have the same configuration as one another in this embodiment. Each of battery strings St1 to St3 is hereinafter referred to as a "battery string St" and each of power lines PL1 to PL3 is hereinafter referred to as a "power line PL," unless they are distinguished.

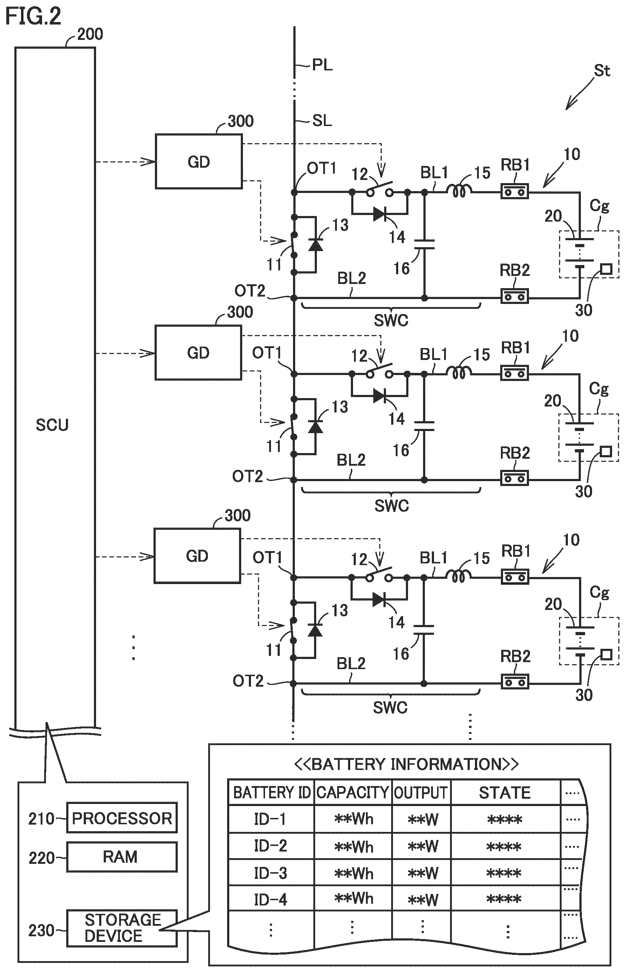

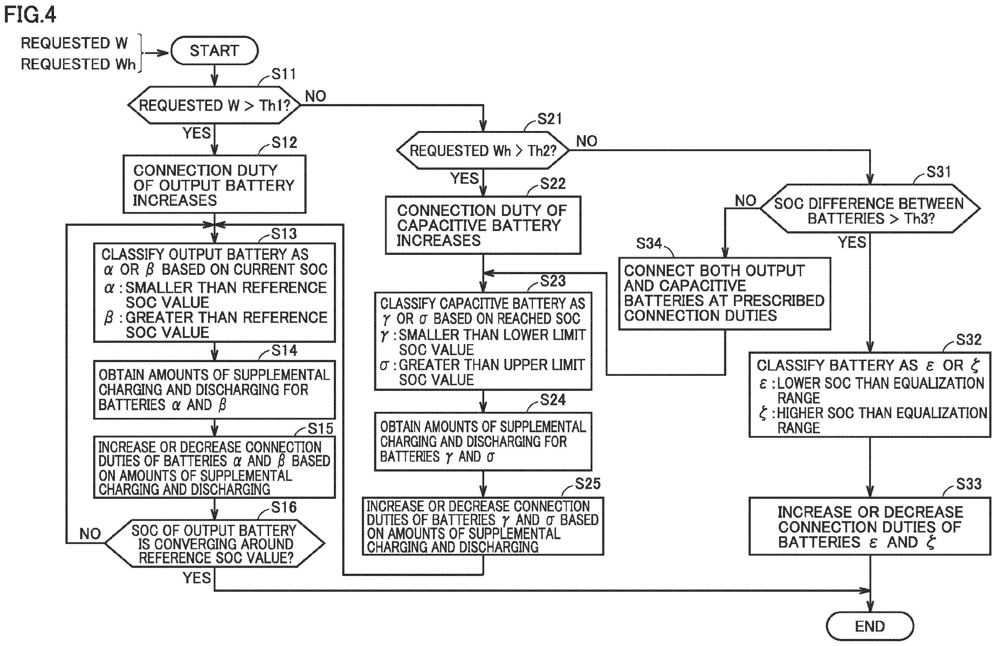

Fig. 2 is a diagram showing a configuration of battery string St. Referring to Fig. 2, the power supply system according to this embodiment further includes a string control unit (SCU) 200 that controls battery string St. SCU 200 includes a processor 210, a random access memory (RAM) 220, and a storage device 230. When processor 210 executes a program stored in storage device 230, various types of processing (e.g., control shown in Fig. 4 which will be described later) are performed. However, these various types of processing can be performed not only by software but also by dedicated hardware (electronic circuitry). SCU 200 may further include a field programmable gate array (FPGA) having the function of performing sweep control. SCU 200 corresponds to an example of "controller" according to the present disclosure.

In the power supply system according to this embodiment, each of battery strings St1 to St3 is provided with SCU 200. For example, when EMS 100 (Fig. 1) receives an energy management request regarding a power grid from a server that manages the power grid, EMS 100 transmits, in response to the request, a signal that requests charging or discharging (hereinafter also referred to as an "EMS signal") to SCU 200 of each battery string St. The EMS signal indicates at least one of requested power (hereinafter represented as "requested W") and requested energy (hereinafter represented as "requested Wh"). The EMS signal according to this embodiment represents electric power on a discharging side as positive (+) electric power, and electric power on a charging side as negative (-) electric power.

Battery string St includes a plurality of battery circuit modules 10 connected in series. A gate driver (GD) 300 is also provided for each battery circuit module 10. GD 300 is configured to drive battery circuit module 10 in accordance with a command from SCU 200. The number of battery circuit modules 10 included in battery string St is arbitrary, and may be from 5 to 50, or may be equal to or greater than 100.

Each battery circuit module 10 includes a switch circuit SWC, a cartridge Cg, circuit breakers RB1, RB2, and output terminals OT1, OT2. Cartridge Cg includes a battery 20 and a monitoring unit 30. An arbitrary secondary battery can be employed as battery 20. Battery 20 may be a used battery. In this embodiment, output batteries and capacitive batteries are mounted on a single battery string St. That is, cartridge Cg including an output battery as battery 20 is set in one battery circuit module 10, and cartridge Cg including a capacitive battery as battery 20 is set in another battery circuit module 10. The output battery is higher in rated output (W) than the capacitive battery. The rated output is the design maximum discharging electric power as indicated by a battery manufacturer. The capacitive battery may be higher in capacity (Wh) than the output battery. The battery capacity corresponds to an amount of electricity stored in a fully charged battery. The output battery may be higher in power density than the capacitive battery. The capacitive battery may be higher in energy density than the output battery.

In this embodiment, cartridge Cg is configured to be attached to and removed from switch circuit SWC. Specifically, circuit breakers RB1 and RB2 (hereinafter referred to as a "circuit breaker RB" unless they are distinguished) switch between conduction and cut-off of power lines that connect switch circuit SWC to cartridge Cg. Circuit breaker RB is an electromagnetic mechanical relay, for example. Each of circuit breakers RB 1 and RB2 may switch between conduction and cut-off in response to a user operation. Circuit breakers RB 1 and RB2 are basically maintained in a conducting state during use of battery circuit module 10. The user may bring circuit breakers RB1 and RB2 into a cut-off state and remove cartridge Cg from switch circuit SWC when stopping the use of battery circuit module 10 (e.g., during a battery change). Since battery string St can operate even with empty cartridges, the user can readily increase or decrease the number of cartridges Cg included in battery string St. Such battery string St is suitable for reuse of batteries.

Monitoring unit 30 includes a battery management system (BMS) that monitors a state of battery 20. The BMS includes various sensors that detect the state (e.g., voltage, current and temperature) of battery 20, and a monitoring integrated circuit (IC) that receives detection signals from the various sensors. The monitoring IC generates a signal indicating the state of battery 20 (hereinafter also referred to as a "BMS signal") using the detection signals from the various sensors, and outputs the generated BMS signal to SCU 200. SCU 200 can obtain the state (e.g., temperature, current, voltage, a state of charge (SOC), and a state of health (SOH)) of battery 20 based on the BMS signal. The SOC indicates a remaining amount of stored power, and represents, for example, the ratio of a current amount of stored power to an amount of stored power in a fully charged state in 0 to 100%. The SOH indicates a degree of health or a degree of deterioration, and represents, for example, the ratio of a current capacity to an initial capacity in 0 to 100%.

Monitoring unit 30 further includes a storage device that stores information about charging performance and discharging performance (such as rated output and capacity) of battery 20. The storage device may be a tag. Monitoring unit 30 may output the information stored in the storage device to SCU 200 when cartridge Cg is set in battery circuit module 10.

Storage device 230 stores information about each battery 20 included in battery string St (hereinafter referred to as "battery information") as being distinguished based on identification information of battery 20 (battery ID). The battery ID indicates a position of battery 20. That is, SCU 200 can identify, based on the battery ID, the position of battery circuit module 10 in which battery 20 is set, as counted from the positive end of battery string St. The battery information includes information indicating the characteristics of battery 20 (e.g., rated output (W), capacity (Wh), power density (W/kg), and energy density (Wh/kg)), and information indicating the state of battery 20 (e.g., temperature, current, voltage, SOC, and SOH detected by the BMS). SCU 200 obtains the latest battery information from monitoring unit 30, and sequentially updates the battery information in storage device 230.

Battery string St has a power line SL (string line) that connects battery circuit modules 10 to one another. Power line SL includes output terminals OT1 and OT2 of each battery circuit module 10. Output terminal OT2 of one battery circuit module 10 is connected to output terminal OT1 of another battery circuit module 10 adjacent to this battery circuit module 10, whereby battery circuit modules 10 are connected to one another. Power line SL is connected to power line PL on the positive side.

Switch circuit SWC is configured to switch between connection and disconnection of battery 20 to and from output terminals OT1 and OT2. Specifically, switch circuit SWC includes a first switch 11 (hereinafter represented as "SW 11"), a second switch 12 (hereinafter represented as "SW 12"), a diode 13 in parallel with SW 11, a diode 14 in parallel with SW 12, a choke coil 15, and a capacitor 16. SW 11 is located on power line SL, and switches between conduction and cut-off between output terminals OT1 and OT2. SW 12 and choke coil 15 are located on a power line BL1 that connects output terminal OT1 to circuit breaker RB1 (positive electrode of battery 20). Output terminal OT2 is electrically connected to circuit breaker RB2 (negative electrode of battery 20) through a power line BL2. Capacitor 16 is connected to each of power line BL1 and power line BL2. Each of SW 11 and SW 12 is a semiconductor switch such as a field effect transistor (FET). The configuration of switch circuit SWC shown in Fig. 2 is merely exemplary and can be modified as appropriate. For example, choke coil 15 may be removed from the circuit. A wiring inductance may be adjusted depending on the circuit configuration.

During a period when battery 20 is connected to output terminals OT1 and OT2 (connection period), a voltage of battery 20 is output between output terminals OT1 and OT2. During the connection period, SW 12 connected in series with battery 20 is controlled to be in an on state (conducting state), and SW 11 connected in parallel with battery 20 is controlled to be in an off state (cut-off state). During a period when battery 20 is disconnected from output terminals OT1 and OT2 (disconnection period), the voltage of battery 20 is not output between output terminals OT1 and OT2. During the disconnection period, SW 12 is controlled to be in an off state (cut-off state). During the disconnection period, SW 11 is controlled to be in an on state (conducting state) except for during a transition period. SCU 200 is configured to control the voltage that is output between output terminals OT1 and OT2 by controlling switch circuit SWC in accordance with a duty ratio indicating a ratio between the connection period and the disconnection period. The duty ratio can be represented as, for example, the ratio of the length of the connection period to the total length of the connection period and the disconnection period (hereinafter referred to as a "connection duty"). The larger the connection duty, the higher the ratio of the connection period to the disconnection period. For example, a connection duty of 0.8 (80%) means a duty ratio (connection period: disconnection period) of "8:2." Control in accordance with the duty ratio is also commonly referred to as "pulse width modulation (PWM) control."

In this embodiment, SCU 200 individually determines the duty ratio for each battery circuit module 10 based on the EMS signal, and individually performs, for each battery circuit module 10, control of switch circuit SWC in accordance with the determined duty ratio (switching control). Specifically, SCU 200 transmits a signal indicating the duty ratio (hereinafter represented as an "SC signal") to GD 300. GD 300 generates, in response to the SC signal, drive signals for driving SW 11 and SW 12 so that a voltage in accordance with the duty ratio specified by SCU 200 is output between output terminals OT1 and OT2, and drives SW 11 and SW 12 by those drive signals.

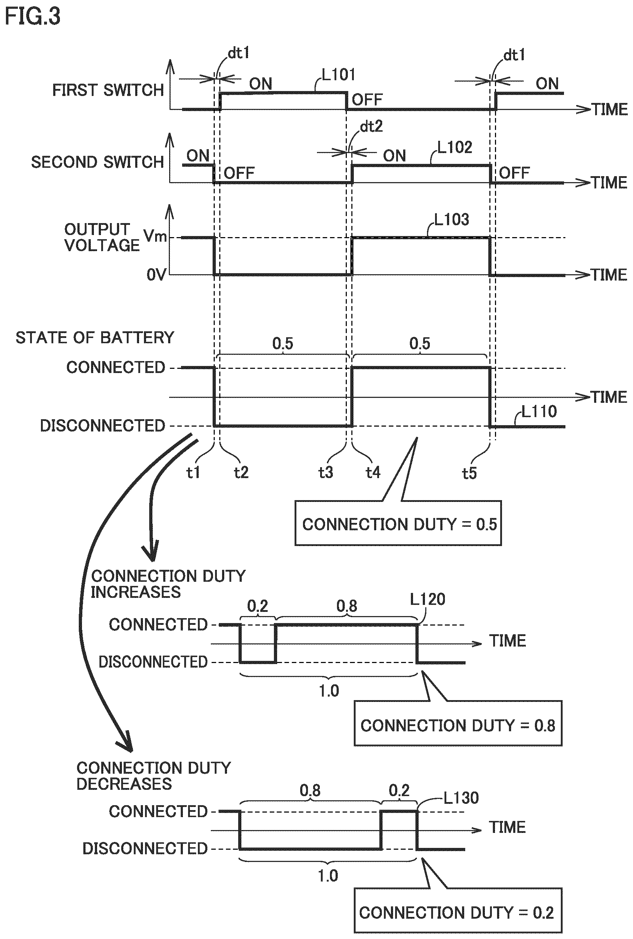

Fig. 3 is a time chart showing an operation example of switch circuit SWC in accordance with the drive signals generated by GD 300. In Fig. 3, lines L101 and L102 indicate the drive signals for SW 11 and SW 12, respectively. A line L103 indicates a transition of the voltage that is output between output terminals OT1 and OT2. A line L110 indicates a transition of the state (connected/disconnected) of battery 20. Each timing in the time chart is represented simply as "t".

Referring to Fig. 3 in conjunction with Figs. 1 and 2, in this example, the connection period is switched to the disconnection period at t1. At t1, SW 12 enters an off state while SW 11 remains in an off state. Then, at timing (t2) delayed from t1 by a prescribed amount of time (hereinafter represented as "dt1"), SW 11 enters an on state. Then, SW 11 enters an off state at t3. Further, at timing (t4) delayed from t3 by a prescribed amount of time (hereinafter represented as "dt2"), SW 12 enters an on state. The disconnection period is thus switched to the connection period. During the connection period, a voltage Vm of battery 20 is output between output terminals OT1 and OT2. Subsequently, at t5, SW 12 enters an off state, and the connection period is again switched to the disconnection period.

The connection duty indicated by line L110 is 0.5. The drive signals indicated by lines L101 and L102 are drive signals generated by GD 300 so that a voltage in accordance with the connection duty of "0.5" is output between output terminals OT1 and OT2. In this embodiment, SCU 200 determines whether or not a prescribed connection condition is satisfied for each battery circuit module 10, and performs a process of increasing the connection duty (hereinafter also referred to as a "connection process") for battery circuit module 10 that satisfies the connection condition, which will be detailed later herein. Specifically, SCU 200 transmits the SC signal indicating a connection duty greater than the current connection duty by a prescribed amount to GD 300. As a result, the drive signal corresponding to the increased connection duty is generated by GD 300, and the connection duty (0.5) indicated by line L110 becomes a connection duty (0.8) indicated by line L120, for example. SCU 200 also determines whether or not a prescribed disconnection condition is satisfied for each battery circuit module 10, and performs a process of decreasing the connection duty (hereinafter also referred to as a "disconnection process") for battery circuit module 10 that satisfies the disconnection condition. Specifically, SCU 200 transmits the SC signal indicating a connection duty smaller than the current connection duty by a prescribed amount to GD 300. As a result, the drive signal corresponding to the decreased connection duty is generated by GD 300, and the connection duty (0.5) indicated by line L110 becomes a connection duty (0.2) indicated by a line L130, for example.

Fig. 4 is a flowchart showing processing according to the switching control performed by SCU 200. The processing shown in this flowchart is repeatedly performed by SCU 200 as long as SCU 200 receives the EMS signal, for example. At the start of the processing, however, the connection duties of all batteries 20 are set to a prescribed initial value (e.g., 0.5). The initial value may be set in response to the EMS signal. SCU 200 performs the series of processing shown in Fig. 4 for each battery string St. Each step in the flowchart is represented simply as "S".

Referring to Fig. 4 in conjunction with Figs. 1 and 2, in S11, SCU 200 determines whether or not the magnitude (absolute value) of requested W indicated by the EMS signal is greater than a prescribed first value (hereinafter represented as "Th1"). When the magnitude (absolute value) of requested W is greater than Th1 (YES in S11), in S12, SCU 200 classifies each battery 20 included in battery string St as an output battery, or as a capacitive battery having smaller output electric power than the output battery, and performs the connection process for the output battery. SCU 200 may classify each battery 20 included in battery string St either as the output battery or as the capacitive battery based on whether or not the rated output (W) of battery 20 is greater than a prescribed threshold value, by reference to the battery information (Fig. 2). The aforementioned connection process increases the connection duty of each output battery included in battery string St. SCU 200 may determine the amount of increase in accordance with the magnitude of requested W. With the increase in the connection duty of the output battery, the output battery is preferentially used in order to meet requested W from EMS 100. In addition to the process of increasing the connection duty of the output battery, SCU 200 may perform a process of deceasing the connection duty of the capacitive battery as needed.

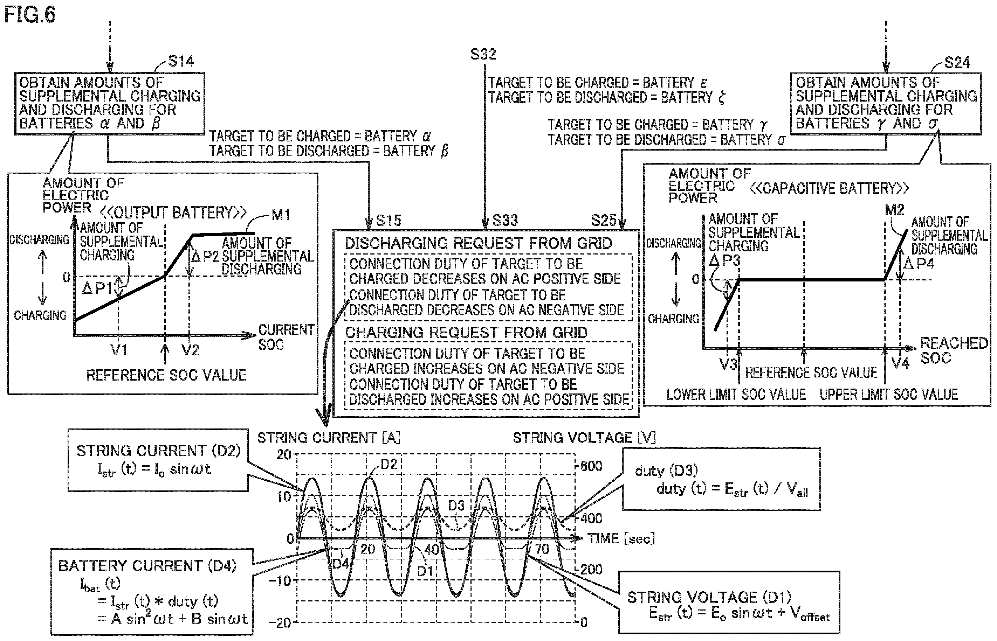

In subsequent S13, SCU 200 further classifies each output battery included in battery string St as a first output battery (hereinafter represented as a "battery α") having a current SOC value smaller than a prescribed reference SOC value (third value), or as a second output battery (hereinafter represented as a "battery β") having a current SOC value greater than the reference SOC value (third value). SCU 200 then obtains an amount of supplemental charging for battery α and an amount of supplemental discharging for battery β in S14, and performs supplemental charging of battery α and supplemental discharging of battery β in subsequent S15. Note that S14 and S15 will be detailed later herein (see Fig. 6).

In subsequent S16, SCU 200 determines whether or not the SOC of each output battery included in battery string St is converging around the reference SOC value. Specifically, the determination is YES in S16 when the SOC of each output battery included in battery string St is within a prescribed SOC range with respect to the reference SOC value (e.g., a range of the reference SOC value ± hysteresis), and the determination is otherwise NO in S16. When the determination is NO in S16, the processing returns to S13, and the supplemental charging and discharging is performed again for bringing the SOC of each output battery close to the reference SOC value. When the determination is YES in S16, on the other hand, the series of processing shown in Fig. 4 ends.

When the magnitude (absolute value) of requested W is equal to or smaller than Th1 (NO in S11), in S21, SCU 200 determines whether or not the magnitude (absolute value) of requested Wh indicated by the EMS signal is greater than a prescribed second value (hereinafter represented as "Th2"). When the magnitude (absolute value) of requested Wh is greater than Th2 (YES in S21), in S22, SCU 200 classifies each battery 20 included in battery string St as an output battery or as a capacitive battery, and performs the connection process for the capacitive battery, as in S12. This connection process increases the connection duty of each capacitive battery included in battery string St. SCU 200 may determine the amount of increase in accordance with the magnitudes of requested W and requested Wh. With the increase in the connection duty of the capacitive battery, the capacitive battery is preferentially used in order to meet requested Wh from EMS 100. In addition to the process of increasing the connection duty of the capacitive battery, SCU 200 may perform a process of deceasing the connection duty of the output battery as needed.

In subsequent S23, SCU 200 calculates a reached SOC value based on requested Wh. The reached SOC value indicates a remaining amount of stored power after energy management through charging or discharging (reached remaining amount of stored power). That is, the reached SOC value corresponds to a value reached by the SOC of battery 20 as a result of battery 20 performing charging or discharging requested by the EMS signal. Then, SCU 200 further classifies each capacitive battery included in battery string St as a first capacitive battery (hereinafter represented as a "battery γ") having a reached SOC value smaller than a prescribed lower limit SOC value (fourth value), or as a second capacitive battery (hereinafter represented as a "battery σ") having a reached SOC value greater than a prescribed upper limit SOC value (fifth value). The upper limit SOC value is an SOC value greater than the lower limit SOC value. SCU 200 then obtains an amount of supplemental charging for battery γ and an amount of supplemental discharging for battery σ in S24, and performs supplemental charging of battery γ and supplemental discharging of battery σ in subsequent S25. Note that S24 and S25 will be detailed later herein (see Fig. 6). When the processing of S25 is performed, the processing proceeds to step S13, and the supplemental charging and discharging of the output battery is performed through the aforementioned processing of S13 to S16.

When the magnitude (absolute value) of requested Wh is equal to or smaller than Th2 (NO in S21), in S31, SCU 200 obtains the SOC of each battery 20 included in battery string St, and calculates a difference between a maximum SOC value and a minimum SOC value (SOC difference) of those SOC values (SOC data of each battery 20). Further, in S31, SCU 200 determines whether or not the SOC difference is greater than a prescribed value (hereinafter represented as "Th3"). When the SOC difference is equal to or smaller than Th3 (NO in S31), in S34, SCU 200 sets the connection duty of each battery 20 (each battery circuit module 10) included in battery string St at a value in accordance with requested W and requested Wh. The processing then proceeds to S23. When the SOC difference is greater than Th3 (YES in S31), on the other hand, the processing proceeds to S32.

In S32, SCU 200 sets an equalization range (target range of SOC equalization) with respect to an average value or a median value of the SOC of each battery 20 included in battery string St. SCU 200 then classifies each battery 20 included in battery string St as a battery having an SOC lower than a lower limit value of the equalization range (hereinafter represented as a "battery ε"), or as a battery having an SOC higher than an upper limit value of the equalization range (hereinafter represented as a "battery ζ"), or as a battery other than batteries ε and ζ. SCU 200 also performs supplemental charging of battery ε and supplemental discharging of battery ζ in S33. In S33, SCU 200 increases or decreases the connection duties of batteries ε and ζ so that charging or discharging in accordance with requested W and requested Wh is performed by battery string St, and that the SOC of each battery 20 included in battery string St falls within the equalization range, which will be detailed later herein (see Fig. 6). When the processing of S33 is performed, the series of processing shown in Fig. 4 ends.

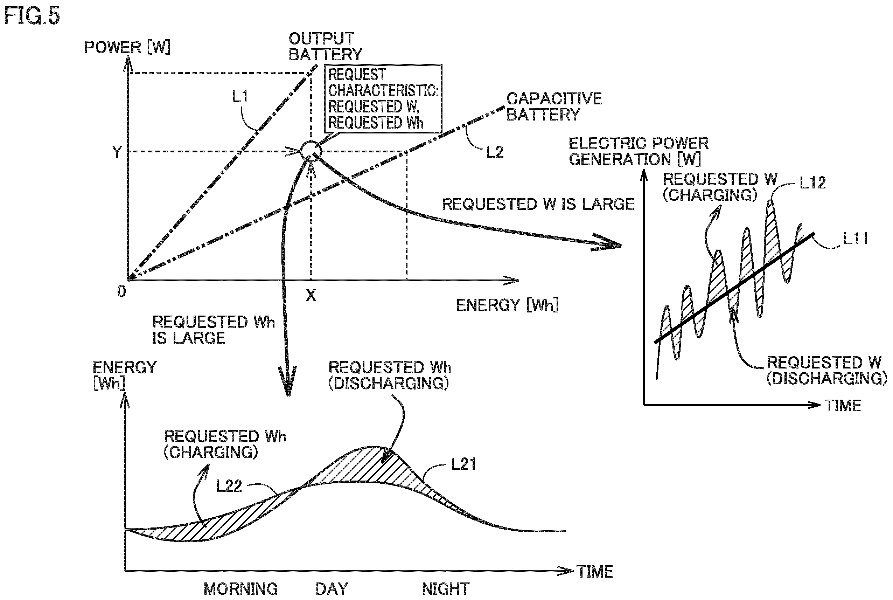

Fig. 5 is a diagram for illustrating energy management performed by battery strings St1 to St3. Referring to Fig. 5, SCU 200 receives a charging request or a discharging request for energy management from EMS 100. SCU 200 may receive a power request for discharging or charging at prescribed power, and an energy request for output or storage of a prescribed amount of energy through continuous discharging or charging.

The power request shown in Fig. 5 calls for energy management for suppressing fluctuations of generated electric power that is output from a power generation facility. Battery strings St1 to St3 may perform, in response to such a power request, charging and discharging for bringing an actual value L12 of the generated electric power close to a target value L11. The power request often calls for discharging or charging of high electric power in a short period of time. The power request is used, for example, for energy management of a naturally fluctuating power supply (such as a photovoltaic power generation facility) whose power generation output fluctuates depending on weather conditions. The energy request shown in Fig. 5 calls for energy management for adjusting the supply-demand balance of a power grid. Battery strings St1 to St3 may perform, in response to such an energy request, charging and discharging for matching an amount of electric power demand L21 with an amount of electric power supply L22 of the power grid.

Here, it is assumed that battery string St is provided with a characteristic (request characteristic) that meets both of the energy request whose requested Wh is X, and the power request whose requested W is Y. In Fig. 5, a line L1 indicates a variation in rated output (W) and capacity (Wh) when the number of output batteries is increased or decreased, for battery string St formed only by output batteries. Numerous output batteries are needed to ensure a capacity X in battery string St formed only by output batteries. A line L2 indicates a variation in rated output (W) and capacity (Wh) when the number of capacitive batteries is increased or decreased, for battery string St formed only by capacitive batteries. Numerous capacitive batteries are needed to ensure a rated output Y in battery string St formed only by capacitive batteries. In the power supply system according to this embodiment, output batteries and capacitive batteries are mounted on a single battery string St, and SCU 200 performs the aforementioned processing shown in Fig. 4, which enables the aforementioned request characteristic to be provided to battery string St without an excessive increase in the number of batteries.

In the power supply system according to this embodiment, when the requested charging or discharging power is greater than Th1 (YES in S11 of Fig. 4), SCU 200 makes the ratio of the connection period to the disconnection period of the output battery larger (S12 of Fig. 4) than the ratio when the requested charging or discharging power is smaller than Th1 (NO in S11 of Fig. 4). When the requested charging or discharging energy is greater than Th2 (YES in S21 of Fig. 4), SCU 200 makes the ratio of the connection period to the disconnection period of the capacitive battery larger (S22 of Fig. 4) than the ratio when the requested charging or discharging energy is smaller than Th2 (NO in S21 of Fig. 4). In such a power supply system, SCU 200 (controller) adjusts the duty ratio of each of the output battery and the capacitive battery in response to the request. As a result, each battery string St can more readily perform charging or discharging in accordance with the requested power, or charging or discharging in accordance with the requested energy.

Fig. 6 is a diagram for illustrating the supplemental charging and supplemental discharging performed in the processing shown in Fig. 4.

Referring to Fig. 6, in S14 of Fig. 4, SCU 200 obtains, based on a map M1 stored in storage device 230, for example, an amount of supplemental charging for battery α in accordance with the difference between the current SOC value and the reference SOC value, and an amount of supplemental discharging for battery β in accordance with the difference between the current SOC value and the reference SOC value. For example, for battery α having a current SOC value of V1, SCU 200 obtains ΔP1 as the amount of supplemental charging. For battery β having a current SOC value of V2, SCU 200 obtains ΔP2 as the amount of supplemental discharging. SCU 200 determines, using the amount of supplemental charging for battery α and the amount of supplemental discharging for battery β, an amount of decrease in the connection duty in a disconnection process for batteries α and β which will be described later (S15), and an amount of increase in the connection duty in a connection process for batteries α and β which will be described later (S15). SCU 200 does not perform supplemental charging and discharging for an output battery having a current SOC value that matches the reference SOC value.

In S24 of Fig. 4, SCU 200 obtains, based on a map M2 stored in storage device 230, for example, an amount of supplemental charging for battery γ in accordance with the difference between the reached SOC value and the lower limit SOC value, and an amount of supplemental discharging for battery σ in accordance with the difference between the reached SOC value and the upper limit SOC value. For example, for battery γ having a reached SOC value of V3, SCU 200 obtains ΔP3 as the amount of supplemental charging. For battery σ having a reached SOC value of V4, SCU 200 obtains ΔP4 as the amount of supplemental discharging. SCU 200 determines, using the amount of supplemental charging for battery γ and the amount of supplemental discharging for battery σ, an amount of decrease in the connection duty in a disconnection process for batteries γ and σ which will be described later (S25), and an amount of increase in the connection duty in a connection process for batteries γ and σ which will be described later (S25). SCU 200 does not perform supplemental charging and discharging for a capacitive battery having a reached SOC value equal to or greater than the lower limit SOC value and equal to or smaller than the upper limit SOC value.

In each of S15, S25 and S33 in Fig. 4, SCU 200 performs the connection process or the disconnection process as described below, based on whether charging or discharging has been requested from EMS 100. The three-phase AC power that is output from battery strings St1 to St3 is hereinafter referred to simply as "three-phase AC power." The positive side and the negative side of the three-phase AC power correspond to a discharging side and a charging side, respectively. In S15, S25 and S33, SCU 200 sets each of batteries α, γ and ε as a target to be charged, and sets each of batteries β, σ and ζ as a target to be discharged, respectively.

When discharging is requested from EMS 100, SCU 200 performs the disconnection process of decreasing the connection duty of the target to be charged (batteries α, γ and ε) on the positive side of the three-phase AC power, and performs the disconnection process of decreasing the connection duty of the target to be discharged (batteries β, σ and ζ) on the negative side of the three-phase AC power. These processes can increase the SOC of the target to be charged that has a low SOC, and decrease the SOC of the target to be discharged that has a high SOC.

When the requested discharging power is greater than Th1 (YES in S11 of Fig. 4), supplemental charging and discharging is performed by the disconnection processes in S15. Specifically, on the positive side of the three-phase AC power, SCU 200 decreases the connection duty of battery α by the amount of supplemental charging obtained in S14. Further, on the negative side of the three-phase AC power, SCU 200 decreases the connection duty of battery β by the amount of supplemental discharging obtained in S14. The disconnection processes for batteries α and β in S15 correspond to an example of "first disconnection process" and an example of "second disconnection process" according to the present disclosure, respectively.

When the requested discharging energy is greater than Th2 (YES in S21 of Fig. 4), supplemental charging and discharging is performed by the disconnection processes in S25. Specifically, on the positive side of the three-phase AC power, SCU 200 decreases the connection duty of battery γ by the amount of supplemental charging obtained in S24. Further, on the negative side of the three-phase AC power, SCU 200 decreases the connection duty of battery σ by the amount of supplemental discharging obtained in S24. The disconnection processes for batteries γ and σ in S25 correspond to an example of "third disconnection process" and an example of "fourth disconnection process" according to the present disclosure, respectively.

When charging is requested from EMS 100, SCU 200 performs the connection process of increasing the connection duty of the target to be charged (batteries α, γ and ε) on the negative side of the three-phase AC power, and performs the connection process of increasing the connection duty of the target to be discharged (batteries β, σ and ζ) on the positive side of the three-phase AC power. These processes can increase the SOC of the target to be charged that has a low SOC, and decrease the SOC of the target to be discharged that has a high SOC.

When the requested charging power is greater than Th1 (YES in S11 of Fig. 4), supplemental charging and discharging is performed by the connection processes in S15. Specifically, on the negative side of the three-phase AC power, SCU 200 increases the connection duty of battery α by the amount of supplemental charging obtained in S14. Further, on the positive side of the three-phase AC power, SCU 200 increases the connection duty of battery β by the amount of supplemental discharging obtained in S14. The connection processes for batteries α and β in S15 correspond to an example of "first connection process" and an example of "second connection process" according to the present disclosure, respectively.

When the requested charging energy is greater than Th2 (YES in S21 of Fig. 4), supplemental charging and discharging is performed by the connection processes in S25. Specifically, on the negative side of the three-phase AC power, SCU 200 increases the connection duty of battery γ by the amount of supplemental charging obtained in S24. Further, on the positive side of the three-phase AC power, SCU 200 increases the connection duty of battery σ by the amount of supplemental discharging obtained in S24. The disconnection processes for batteries γ and σ in S25 correspond to an example of "third connection process" and an example of "fourth connection process" according to the present disclosure, respectively.

In the power supply system according to this embodiment, when discharging or charging of large power (high electric power) is requested, SCU 200 (controller) adjusts the duty ratio of the output battery in accordance with the three-phase AC power that is output from three battery strings St1 to St3 (the U-phase, V-phase and W-phase battery strings). Accordingly, a large deviation of the remaining amount of stored power in each output battery from the reference value (third value) can be suppressed in each of battery strings St1 to St3. Further, in the power supply system described above, when discharging or charging of large energy (large amount of electric power) is requested, SCU 200 (controller) adjusts the duty ratio of the capacitive battery in accordance with the three-phase AC power that is output from three battery strings St1 to St3 (the U-phase, V-phase and W-phase battery strings). This can keep the remaining amount of stored power in each capacitive battery from becoming smaller than the lower limit value (fourth value) or greater than the upper limit value (fifth value) in each of battery strings St1 to St3.

In the power supply system according to this embodiment, SCU 200 (controller) determines, using the degree of deviation between the current remaining amount of stored power in the output battery and the reference value (third value), the amount of control (the amount of decrease or the amount of increase) of the ratio of the connection period in each of the first and second disconnection processes and the first and second connection processes. Such a controller readily controls the duty ratio of each output battery so as to suppress the deviation of the remaining amount of stored power in each output battery from the reference value (third value) when, for example, battery strings St1 to St3 perform discharging or charging in accordance with the power request. SCU 200 (controller) also determines, using the degree of deviation between the value reached by the remaining amount of stored power in the capacitive battery and the threshold value (the fourth value or the fifth value), the amount of control (the amount of decrease or the amount of increase) of the ratio of the connection period in each of the third and fourth disconnection processes and the third and fourth connection processes. Such a controller readily controls the duty ratio of each capacitive battery so as to suppress the deviation of the remaining amount of stored power in each capacitive battery from the threshold value (the fourth value or the fifth value) when, for example, battery strings St1 to St3 perform discharging or charging in accordance with the energy request. The degree of deviation may be represented as a difference, or as a ratio. The closer the ratio is to 1, the lower the degree of deviation.

In Fig. 6, each of waveforms D1 to D4 indicates a state transition of battery string St when SCU 200 performs the processing shown in Fig. 4. Waveform D1 indicates a string voltage (Eₛₜᵣ). The string voltage is expressed by an equation such as "Eₛₜᵣ (t) = Eₒsinωt + V_{offset}" (Eₒ: output phase voltage amplitude, V_{offset}: offset voltage). Waveform D2 indicates a string current (Iₛₜᵣ). The string current is expressed by an equation such as "Iₛₜᵣ (t) = Iₒsinωt" (Iₒ: output current amplitude). Waveform D3 indicates a duty of the string voltage. The duty of the string voltage is expressed by an equation such as "duty (t) = Eₛₜᵣ (t) / Vₐₗₗ" (Vₐₗₗ: string total voltage). The string total voltage corresponds to a value determined by multiplying the number of batteries 20 included in battery string St by the voltage per battery (Vm). Waveform D4 indicates a battery current (I_{bat} (t)). The battery current corresponds to an average current value per battery in battery string St, and is expressed by an equation such as "I_{bat} (t) = Asin²ωt + Bsinωt" (A = EₒIₒ / Vₐₗₗ, B = V_{offset}Iₒ / Vₐₗₗ).

When battery strings St1 to St3 are outputting three-phase AC power, the current of each battery string St transitions as indicated by waveform D2. Thus, even when battery string St is being charged, the battery current is flowing on the charging side and the discharging side when viewed at the time level of AC frequency. Therefore, only a specific battery can be discharged through the aforementioned processing of S15, S25 and S33 in Fig. 4. In addition, when battery string St is being discharged, only a specific battery can be charged through the aforementioned processing of S15, S25 and S33 in Fig. 4.

It should be understood that the embodiment disclosed herein is illustrative and non-restrictive in every respect. The scope of the present invention is defined by the terms of the claims, rather than the embodiment described above, and is intended to include any modifications within the scope and meaning equivalent to the terms of the claims.

### REFERENCE SIGNS LIST

10 battery circuit module; 11 first switch; 12 second switch; 20 battery; 30 monitoring unit; 100 EMS; 200 SCU; 210 processor; 220 RAM; 230 storage device; Cg cartridge; OT1, OT2 output terminal; SWC switch circuit; St, St1 to S3 battery string.

## Claims

1. A power supply system comprising:
a battery string; and
a controller that controls the battery string, wherein
the battery string includes a plurality of battery circuit modules connected in series,
each of the plurality of battery circuit modules includes a battery, an output terminal, and a switch circuit that switches between connection and disconnection of the battery to and from the output terminal, and
the controller is configured to individually perform, for each of the battery circuit modules, switching control to control the switch circuit in accordance with a duty ratio, the duty ratio indicating a ratio between a connection period during which the output terminal outputs a voltage of the battery and a disconnection period during which the output terminal does not output the voltage of the battery.

2. The power supply system according to claim 1, wherein
the power supply system includes a U-phase battery string, a V-phase battery string and a W-phase battery string as the battery string,
the U-phase battery string, the V-phase battery string and the W-phase battery string are Y-connected to output three-phase AC power, and
in the switching control of each of the U-phase battery string, the V-phase battery string and the W-phase battery string, the controller determines the duty ratio for each of the battery circuit modules using at least one of requested charging or discharging power, requested charging or discharging energy, a characteristic of the battery, and a state of the battery.

3. The power supply system according to claim 2, wherein
the controller classifies each battery included in the battery string as an output battery, or as a capacitive battery having smaller output electric power than the output battery,
when requested charging or discharging power is greater than a first value, the controller makes a ratio of the connection period to the disconnection period of the output battery larger than the ratio when the requested charging or discharging power is smaller than the first value, and
when requested charging or discharging energy is greater than a second value, the controller makes a ratio of the connection period to the disconnection period of the capacitive battery larger than the ratio when the requested charging or discharging energy is smaller than the second value.

4. The power supply system according to claim 3, wherein
the controller classifies each output battery included in the battery string as a first output battery having a current remaining amount of stored power smaller than a third value, or as a second output battery having a current remaining amount of stored power greater than the third value,
the controller classifies each capacitive battery included in the battery string as a first capacitive battery having a reached remaining amount of stored power smaller than a fourth value, or as a second capacitive battery having a reached remaining amount of stored power greater than a fifth value which is greater than the fourth value, the reached remaining amount of stored power being a remaining amount of stored power reached by requested charging or discharging,
when requested discharging power is greater than the first value, the controller performs a first disconnection process of decreasing a ratio of the connection period to the disconnection period of the first output battery on a positive side of the three-phase AC power, and performs a second disconnection process of decreasing a ratio of the connection period to the disconnection period of the second output battery on a negative side of the three-phase AC power,
when requested charging power is greater than the first value, the controller performs a first connection process of increasing the ratio of the connection period to the disconnection period of the first output battery on a negative side of the three-phase AC power, and performs a second connection process of increasing the ratio of the connection period to the disconnection period of the second output battery on a positive side of the three-phase AC power,
when requested discharging energy is greater than the second value, the controller performs a third disconnection process of decreasing a ratio of the connection period to the disconnection period of the first capacitive battery on a positive side of the three-phase AC power, and performs a fourth disconnection process of decreasing a ratio of the connection period to the disconnection period of the second capacitive battery on a negative side of the three-phase AC power, and
when requested charging energy is greater than the second value, the controller performs a third connection process of increasing the ratio of the connection period to the disconnection period of the first capacitive battery on a negative side of the three-phase AC power, and performs a fourth connection process of increasing the ratio of the connection period to the disconnection period of the second capacitive battery on a positive side of the three-phase AC power.

5. The power supply system according to claim 4, wherein
when requested discharging power is greater than the first value, the controller determines, using a degree of deviation between the current remaining amount of stored power in the first output battery and the third value, an amount of decrease in the ratio of the connection period in the first disconnection process, and determines, using a degree of deviation between the current remaining amount of stored power in the second output battery and the third value, an amount of decrease in the ratio of the connection period in the second disconnection process,
when requested charging power is greater than the first value, the controller determines, using the degree of deviation between the current remaining amount of stored power in the first output battery and the third value, an amount of increase in the ratio of the connection period in the first connection process, and determines, using the degree of deviation between the current remaining amount of stored power in the second output battery and the third value, an amount of increase in the ratio of the connection period in the second connection process,
when requested discharging energy is greater than the second value, the controller determines, using a degree of deviation between the reached remaining amount of stored power in the first capacitive battery and the fourth value, an amount of decrease in the ratio of the connection period in the third disconnection process, and determines, using a degree of deviation between the reached remaining amount of stored power in the second capacitive battery and the fifth value, an amount of decrease in the ratio of the connection period in the fourth disconnection process, and
when requested charging energy is greater than the second value, the controller determines, using the degree of deviation between the reached remaining amount of stored power in the first capacitive battery and the fourth value, an amount of increase in the ratio of the connection period in the third connection process, and determines, using the degree of deviation between the reached remaining amount of stored power in the second capacitive battery and the fifth value, an amount of increase in the ratio of the connection period in the fourth connection process.
